# FASCICULE DE BREVET EUROPEEN

(11) **EP 4 198 652 B1**
(45) Date de publication et mention de la délivrance du brevet: **08.10.2025**
(21) Numéro de dépôt: 21215636.8
(22) Date de dépôt: 17.12.2021
(51) Int. Cl.: G04R 60/08, G04R 60/10, G04G 21/08

(54) **MONTRE ELECTRONIQUE**
ELEKTRONISCHE ARMBANDUHR
ELECTRONIC WATCH

(43) Date de publication de la demande: 21.06.2023
(73) Titulaire: ETA SA Manufacture Horlogère Suisse, 2540 Grenchen (CH)
(72) Inventeur: STEHLIN, Xavier, 1588 Cudrefin (CH)
(74) Mandataire: ICB SA

(56) Documents cités:
- WO-A1-2019/135856
- US-A1- 2018 088 724

## Description

### Domaine technique de l'invention

L'invention concerne une montre électronique comprenant une lunette formant avec un substrat d'un circuit électronique, une enceinte comprenant un circuit de commande tactile et un circuit d'antenne d'un module de communication de ladite montre.

### Arrière-plan technologique

On connait dans l'état de la technique de nombreux objets électroniques portables susceptibles de se connecter à des réseaux de communication tels que des montres électroniques qui sont pourvus d'interfaces tactiles classiquement agencées dans les glaces de ces dernières. De telles interfaces tactiles sont utilisées généralement pour améliorer l'interactivité des montres et en simplifier les manipulations en particulier lorsque ces dernières proposent un nombre conséquent de menus et de fonctions.

Afin de pouvoir se connecter à des réseaux de communications tels que des réseaux de type Bluetooth ou encore en lien avec la géolocalisation, de telles montres électroniques comprennent des moyens de communication intégrant classiquement une antenne. Il est connu que la taille optimale d'une telle antenne dépend directement de la longueur d'onde du signal émis/reçu. En effet, une antenne de longueur optimale permet d'envoyer/recevoir un signal en entier et à pleine puissance.

Dans ces montres, l'espace disponible étant limité, une antenne doit disposer d'un design adapté pour s'intégrer dans le boitier de la montre. Et si la montre intègre un moyen de communication radio qui fonctionne sur des fréquences radio (telles que le 2.4 GHz ou 1.5 GHz), la taille du produit devient critique par rapport à la longueur d'onde (120 mm et 200 mm).

Par ailleurs, d'autres contraintes doivent également être prises en compte du fait que ces montres comportent beaucoup de parties métalliques et qu'une antenne doit en être isolée.

Le document US 2018/088724 A1 divulgue une montre électronique comprenant un boitier pourvu d'une carrure et d'une lunette formant en tout ou partie une interface tactile ledit boitier comprenant un dispositif électronique comportant un circuit électronique pourvu d'un substrat, la lunette comportant un circuit d'antenne d'un module de communication et un circuit de commande tactile d'un organe de commande tactile du dispositif électronique.

Dans ce contexte, on comprend qu'il existe un besoin de trouver une solution, notamment qui ne présente pas les inconvénients de l'art antérieur.

### Résumé de l'invention

Un des buts de l'invention est de disposer d'une montre comprenant une interface tactile et intégrant un circuit d'antenne ayant une longueur optimale pour envoyer/recevoir un signal en entier et à pleine puissance et venant s'intégrer dans le boitier de cette montre dont le volume d'accueil est limité.

Un autre but de l'invention est d'obtenir une montre électronique dont l'esthétisme, la consommation énergétique et les coûts de fabrication ne soient pas impactés ou peu impactés par l'intégration d'une interface tactile dans une lunette de cette montre en particulier d'un circuit d'antenne.

Un autre but de l'invention est d'obtenir une montre électronique dont l'esthétisme, la consommation énergétique et les coûts de fabrication ne soient pas impactés ou peu impactés par l'intégration d'un circuit de commande tactile et d'un circuit d'antenne dans une lunette de cette montre.

Dans ce dessein, l'invention concerne une montre électronique selon la revendication 1.

Dans d'autres modes de réalisation :
- ledit élément incurvé comprend une autre extrémité qui est libre ;
- ledit élément incurvé comprend des première et deuxième parties rectilignes ou sensiblement rectilignes qui sont reliées entre elles par une troisième partie courbée de cet élément ;
- le module de communication comprend un microcircuit connecté à une portion de connexion du circuit d'antenne par l'intermédiaire d'une une borne de connexion comprise sur la face supérieure du substrat ;
- le circuit de commande comprend un microcontrôleur connecté à ladite au moins une électrode par l'intermédiaire de la borne de connexion comprise sur la face supérieure du substrat ;
- la lunette est fabriquée en au moins un matériau diélectrique et/ou électriquement non conducteur ;
- la montre est une montre connectée comprenant la lunette qui est une lunette formant en tout ou partie une interface tactile.
- l'élément incurvé est compris en partie sur la surface supérieure du substrat notamment l'extrémité de cet élément incurvé qui est la seule partie dudit élément qui est comprise sur cette surface supérieure en étant connectée à une borne de connexion.

### Brève description des figures

D'autres caractéristiques et avantages de la présente invention ressortiront plus clairement de la description détaillée qui suit, faite en liaison avec les figures annexées listées ci-dessous :
- la figure 1 est une représentation schématique d'une montre électronique comprenant une lunette formant en tout ou partie une interface tactile de ladite montre, selon un mode de réalisation de l'invention ;
- la figure 2A est une représentation d'une partie d'un boitier de la montre comprenant un substrat d'un circuit électronique de la montre comprenant un circuit de commande tactile, selon le mode de réalisation de l'invention ;
- la figure 2B est une vue à plus grande échelle de la partie E de la figure 2A, selon le mode de réalisation de l'invention ;
- la figure 3 est une représentation schématique de la montre comprenant un module de communication et un organe de commande tactile dont respectivement le circuit d'antenne et le circuit de commande tactile sont agencés dans une enceinte formée par la lunette avec une zone périphérique du substrat, selon le mode de réalisation de l'invention, et
- la figure 4 représente la lunette de la montre électronique laissant voir par transparence le circuit d'antenne et le circuit de commande tactile, selon le mode de réalisation de l'invention.

### Description détaillée de l'invention

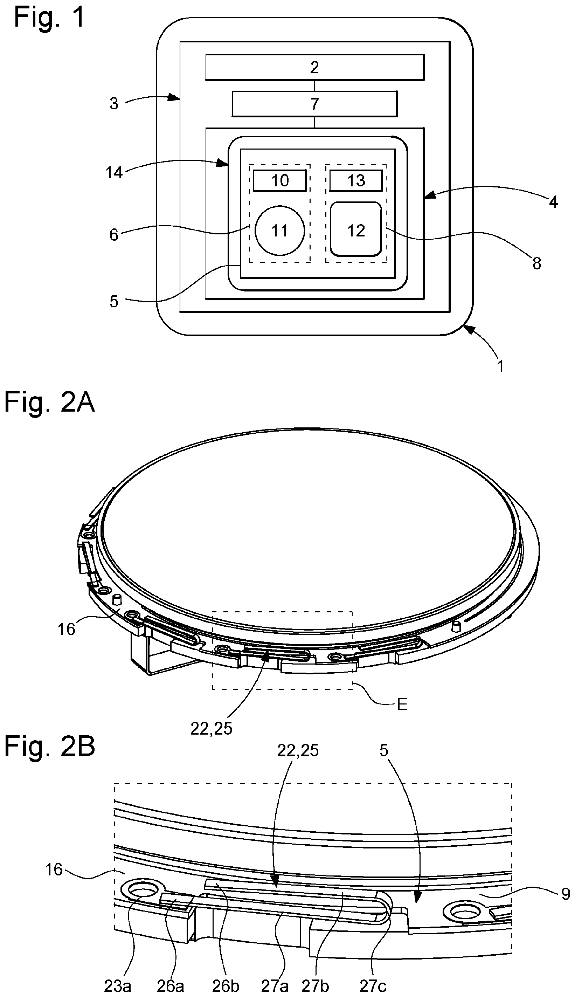

En référence à la figure 1, l'invention porte sur une montre électronique 1 telle qu'une montre connectée. Dans ce contexte, une telle montre électronique 1 est pourvue d'un boitier 3 comportant une lunette 2 formant en tout ou partie une interface tactile de ladite montre électronique 1 par l'intermédiaire de laquelle un porteur de cette montre 1 peut interagir avec cette dernière dans l'optique de contrôler par exemple des fonctions horlogères de cette montre 1. Ce boitier 3 comporte également une carrure qui peut être réalisée en métal (par ex. en acier, de préférence inoxydable), en un matériau synthétique (par ex. dans un matériau composite comprenant une matrice polymère chargée de fibres, typiquement de carbone) ou en céramique ou encore en au moins un matériau diélectrique et/ou électriquement non conducteur. Le boitier 3 comprend aussi un fond et une glace qui participent à former avec la carrure, un espace clos dans ce boitier 3.

Dans un tel espace, sont agencés notamment un dispositif d'affichage 7 et un dispositif électronique 4 de ladite montre électronique 1. Le dispositif d'affichage 7 comporte des éléments d'affichage pouvant être analogiques comme des aiguilles et/ou digitales comme un écran LCD, LED ou encore OLED. Un tel dispositif d'affichage 7 est localisé entre la glace et le dispositif électronique 4, un espaceur ou rehaut pouvant être agencé entre la glace et ce dispositif d'affichage 7.

S'agissant du dispositif électronique 4, il comprend un mouvement horloger électronique. Il est configuré pour fournir au moins une information devant être affichée sur ce dispositif d'affichage 7. Ce dispositif électronique 4 comporte de manière non exhaustive et non limitative un module de communication 6, un module de contrôle de la montre électronique, un accumulateur d'énergie électrique notamment une batterie ainsi que différents capteurs comme par exemple des capteurs participant à la détermination d'une géolocalisation, d'une altitude ou d'une température d'un lieu ou encore dans la détermination de paramètres physiologiques, biométriques, vitaux et/ou comportementaux du porteur de la montre électronique 1.

On notera que dans cette configuration, le module de contrôle permet au porteur d'une telle montre électronique 1 de pouvoir interagir avec cette dernière notamment en pouvant activer/désactiver/sélectionner différentes fonctions - par exemple des fonctions horlogères - susceptibles d'être mises en œuvre par cette montre électronique 1. Ce module de contrôle comprend un organe de commande tactile 8 et dans des alternatives d'autres organes de commande tels que des poussoirs ou des boutons agencés sur la carrure.

Dans le dispositif électronique 4, le module de communication 6 comprend un circuit d'antenne 10 connecté à un microcircuit 11, et l'organe de commande tactile 8 comprend un microcontrôleur 12 connecté à un circuit de commande tactile 13. Plus précisément, ce dispositif 4 comprend un circuit imprimé 14 comportant le microcontrôleur 12 de l'organe de commande 8 et un microcircuit 11 du module de communication 6. Ce circuit imprimé 14 comprend un substrat 5 dont une zone périphérique 9 de sa surface supérieure 17 forme avec ladite lunette 2 montée sur la carrure, une enceinte dans laquelle sont compris le circuit d'antenne 10 et le circuit de commande tactile 13.

Une telle lunette 2 est de préférence fixée/montée sur la carrure du boitier 3 et enserre la glace. Il peut s'agir d'une lunette tournante ou d'une lunette fixe. Cette lunette 2 peut être une pièce fixée de manière amovible sur la carrure ou encore une pièce venue de matière avec cette carrure. Il peut s'agir d'une pièce monobloc ou à l'inverse d'une pièce formée de plusieurs parties reliées entre elles de manière réversible et/ou étanche, par exemple de deux parties reliées entre elles de manière réversible et/ou étanche. La lunette 2 comprend un corps pourvu d'une face interne et d'une face externe 17. La face externe 17 est une face visible de cette lunette 2 par le porteur qui peut être manipulée notamment au niveau de première et deuxième zones tactiles 18a, 18b définies sur cette face 17. La lunette 2 peut comprendre sur sa face externe 17 une graduation. Dans l'exemple illustré, la graduation comprend des index figuratifs 24 qui se présentent sous la forme de chiffres (de préférence arabes).

Afin que le circuit d'antenne 10 et le circuit de commande 13 fonctionnent de manière efficace et/ou optimale, cette lunette 2 est réalisée dans au moins un matériau diélectrique et/ou électriquement non conducteur. Ledit au moins un matériau permet de contribuer à la réalisation de l'effet capacitif de l'organe de commande tactile 8. Ce matériau participe aussi à ne pas détériorer le rayonnement du circuit d'antenne 10, d'agrandir sa longueur électrique et d'améliorer son rendement par rapport à sa taille physique. Un tel matériau peut être par exemple un polymère, du titane ou une céramique, ou tout autre matériau de synthèse. On notera qu'il est possible que tout le corps de cette lunette 2 ne soit pas réalisé dans ce type de matériau mais que seulement des portions de ce corps :
au regard desquelles sont situés/localisés le circuit d'antenne 10 et le circuit de commande 13, soient réalisées en ce matériau, et/ou
comprenant les première et deuxième zones tactiles 18a, 18b de la face externe 17 du corps de cette lunette 2 soient réalisées en ce matériau.

Le corps de la lunette 2 peut comprendre des aménagements visant à donner accès au circuit imprimé 14 comportant le microcontrôleur 12 de l'organe de commande 8 et le microcircuit 11 du module de communication 6. De tels aménagements offrent ainsi la possibilité de constituer un passage dans ce corps de la lunette 2 afin de connecter le circuit de commande 13, en particulier les électrodes 22, et le circuit d'antenne 10 respectivement au microcontrôleur 12 de l'organe de commande 8 et au microcircuit 11 du module de communication 6.

En référence aux figures 1 à 4, l'organe de commande 8 comprend le microcontrôleur 12 qui est connecté au circuit de commande tactile 13. Un tel circuit de commande tactile 13 comprend au moins un élément incurvé 25 en matériau conducteur formant une électrode 22 dont une extrémité 26a est connectée à une borne de connexion 23a de l'organe de commande tactile 8 comprise sur la surface supérieure 16 de la zone périphérique 9 du substrat 5.

Cet élément incurvé 25 comprend des première et deuxième parties 27a, 27b rectilignes ou sensiblement rectilignes qui sont reliées entre elles par une troisième partie courbée 27c de cet élément 25. Ainsi que nous l'avons évoqué, cet élément incurvé 25 comprend donc la première extrémité 26a qui est connectée à la borne de connexion 23a ainsi qu'une deuxième extrémité 26b qui est dite libre. Dans cette configuration, la première partie 27a comprend la première extrémité 26a et la deuxième partie est pourvue de l'extrémité libre 26b. Cette deuxième partie 27b est en tout ou partie localisée à proximité voire en contact avec une portion de la face interne du corps de la lunette 2 agencée en dessous d'au moins une zone tactile 18a, 18b de la lunette 2 définie sur une face externe 17 de ce corps.

L'élément incurvé 25 formant l'électrode 22 du circuit de commande tactile 13, est compris en partie sur la zone périphérique 9 de la surface supérieure 16 du substrat 5. Autrement dit, seule la première extrémité 26a de cet élément incurvé 25 qui est connectée à la borne de connexion 23a, est comprise sur cette surface supérieure 16. Ainsi on comprend qu'à l'exception de la première extrémité 26a, le reste du corps de la première partie 27a ainsi que les deuxième et troisième parties 27b, 27c de cet élément incurvé 25 ne sont pas comprises sur la surface supérieure 16 du substrat 5. Dans cette configuration, le reste du corps de la première partie 27a ainsi que les deuxième et troisième parties 27b, 27c de cet élément incurvé 25 sont alors localisés entre cette surface supérieure 16 et la face interne de la lunette 2, la deuxième partie27b pouvant en tout ou partie être en contact avec cette face interne.

Ainsi que nous l'avons évoqué précédemment, le substrat 5 comprend la borne de connexion 23a à laquelle est connectée la première extrémité 26a de l'élément incurvé 25 formant l'électrode 22. Cette borne de connexion 23a permet ainsi de de relier/connecter cette électrode 22 au microcontrôleur 12 de l'organe de commande 8. Dans cette configuration, l'organe de commande 8 comprend une piste électrique 21 susceptible de réaliser la connexion entre chaque borne de connexion 23a et le microcontrôleur 12. De cette manière, chaque électrode 22 est ainsi connectée au microcontrôleur 12 à partir d'une piste électrique 20. On remarquera enfin que le circuit de commande tactile 13 comprend de préférence autant de pistes électriques 21 que le circuit de commande 12 comprend d'électrodes 22.

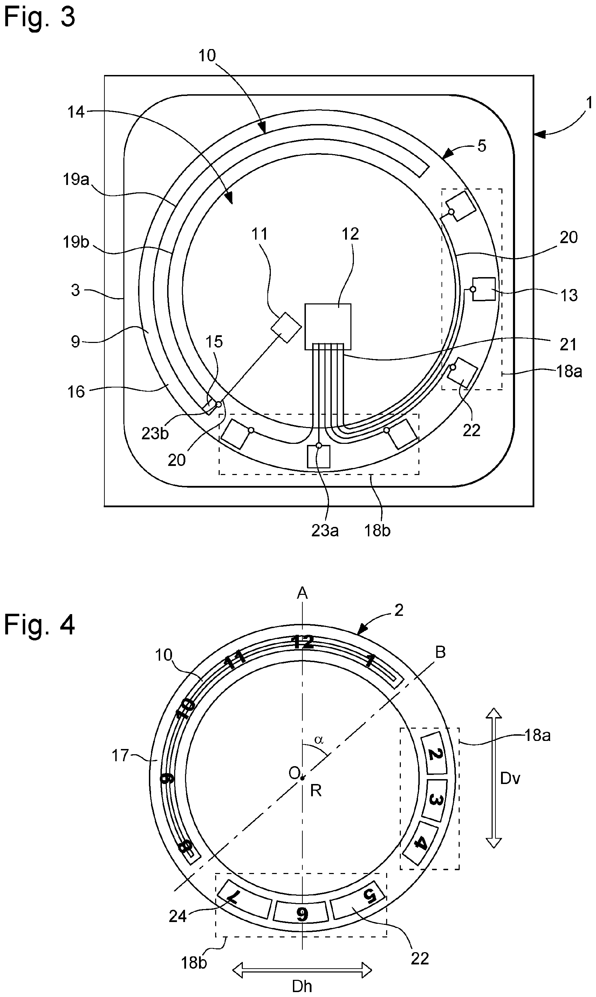

Sur ces figures 3 et 4, l'organe de commande tactile 8 comprend six électrodes 22 réparties dans l'enceinte formée par le corps de la lunette 2 et la zone périphérique 9 de la surface supérieure 16 du substrat 5. Plus précisément, les éléments incurvés 25 formant ces électrodes 22 sont agencés dans cette enceinte de manière à définir/former les deux zones tactiles 18a, 18b distinctes définies sur la face externe 17 de cette lunette 2, ces deux zones tactiles 18a, 18b formant ainsi l'interface tactile de la montre électronique 1.

Dans cette configuration, cette enceinte comprend plusieurs électrodes 22 par zone tactile 18a, 18b. La première zone tactile 18a comprend trois électrodes 22 agencées respectivement sous les index 24 deux, trois et quatre définis sur la face externe 17 de la lunette 2. La deuxième zone tactile 18b comprend également trois électrodes 22 agencées respectivement sous les index 24 cinq, six et sept définis sur cette face externe 17 de la lunette 2. Dans cette configuration, la première zone tactile 18a permet au porteur de la montre 1 d'interagir avec cette dernière en effectuant un déplacement en particulier un « déplacement vertical » (référencé Dv sur la figure 4) d'un accessoire tel qu'un stylet ou encore d'une extrémité d'un de ses membres comme un doigt sur cette première zone 18a. S'agissant de la deuxième zone tactile 18b, elle permet au porteur de la montre 1 d'interagir avec cette dernière en effectuant un déplacement en particulier un « déplacement horizontal » (référencé Dh sur la figure 4) d'un tel accessoire ou encore de l'extrémité d'un de ses membres sur cette zone 18b. Le déplacement vertical décrit une trajectoire qui est sensiblement parallèle ou parallèle à un axe de symétrie A de la lunette 2 passant par le centre O de cette lunette 2 et cette trajectoire étant aussi sensiblement perpendiculaire ou perpendiculaire à un axe de révolution R de cette lunette 2. S'agissant du déplacement horizontal, il décrit une trajectoire qui est quant à elle sensiblement perpendiculaire ou perpendiculaire à cet axe A (ou à la trajectoire décrite par le déplacement vertical) et aussi à l'axe de révolution R de cette lunette 2. Un tel axe A sépare la lunette 2 en deux parties/portions égales en reliant les index 24 douze et six présents sur la face externe 17 de cette lunette 2.

Dans le dispositif électronique 4, le module de communication 6 est apte permettre la connexion de le montre électronique 1 à un réseau de communication de type Bluetooth. Autrement dit le module de communication 6 est configuré pour communiquer selon un protocole de type Bluetooth. De manière alternative, ce module de communication 6 peut être apte à permettre la connexion de la montre 1 à un réseau de localisation par satellite GNSS (Geolocation and Navigation Satellite System), tel que par exemple le GPS (Global Positioning System), Glonass ou Galileo. Ce module de communication 6 comprend le circuit d'antenne 10 connecté au microcircuit 11.

Dans le présent mode de réalisation, un tel circuit d'antenne 10 est compris également dans l'enceinte formée par le corps de la lunette 2 et la zone périphérique 9 de la surface supérieure 16 du substrat 5. Ce circuit d'antenne 10 comprend une portion de connexion 15 et des premier et deuxième brins 19a, 19b présentant chacun une extrémité proximale et une extrémité distale, et s'étendant en parallèle entre leurs extrémités proximales et distales.

Dans ce circuit d'antenne 10, l'architecture à deux brins en parallèle permet d'élargir la bande de fréquence (100MHz), nécessaire par exemple pour communiquer sur un réseau de communication de type Bluetooth (2.4 GHz). Dans ce circuit d'antenne 10, les premier et deuxième brins 19a, 19b sont connectés par leurs extrémités distales ainsi qu'au niveau de leurs extrémités proximales. Dans cette configuration, le circuit d'antenne 10 s'étend essentiellement selon une trajectoire en arc de cercle en comportant deux brins 19a, 19b agencés en parallèle dans cette enceinte qui suit cette trajectoire.

Ce circuit d'antenne 10 comprend une portion de connexion 15 qui est reliée à une borne de connexion 23b du module de communication 6. Cette borne de connexion 23b est comprise dans la zone périphérique 9 de la surface supérieure 16 du substrat 5. Dans ce circuit d'antenne 10, une telle portion de connexion 15 est localisée au niveau de la jonction des extrémités proximales ou des extrémités distales de ses premier et deuxième brins 19a, 19b.

On comprend qu'une telle borne de connexion 23b permet ainsi de relier/connecter le circuit d'antenne 10 au microcircuit 11 du module de communication 6 au niveau de la portion de connexion 15. Dans cette configuration, le module de communication 6 comprend une piste électrique 20 susceptible de réaliser la connexion entre la borne de connexion 23b et le microcircuit 11.

Ce circuit d'antenne 10 est compris en partie sur la surface supérieure 16 de la zone périphérique 9 du substrat 5. Autrement dit, seule la portion de connexion 15 du circuit d'antenne 10 qui est reliée à la borne de connexion 23b, est comprise sur cette surface supérieure 16. Ainsi on comprend qu'à l'exception de cette portion de connexion 15, le reste du corps du circuit d'antenne 10 n'est pas compris sur la surface supérieure 16 du substrat 5. Dans cette configuration, le reste du corps de ce circuit d'antenne 10 est situé dans l'enceinte entre cette surface supérieure 16 et la face interne de la lunette 2.

Dans une variante, le circuit d'antenne 10 peut être compris entièrement sur la surface supérieure 16 de la zone périphérique 9 du substrat 5 ou sur la face interne du corps de la lunette 2. Dans ce contexte ce circuit d'antenne 11 et en particulier les premier et deuxième brins 19a, 19b qui le constituent, sont réalisés à partir d'un dépôt sur la face interne ou la surface supérieure 16 d'au moins une couche d'un matériau conducteur et ce, à partir d'une technologie de dépôt physique en phase vapeur d'un matériau conducteur ou d'une technologie d'impression sélective à une échelle micrométrique de ce matériau conducteur. Une technologie de sérigraphie par de l'argent sur un substrat 5 en polyester ou par du cuivre sur un substrat 5 en polyimide est aussi envisageable.

Dans cette montre 1, le circuit d'antenne 10 et le circuit de commande tactile 13 sont localisés dans ladite enceinte formée par la lunette et la surface supérieure 16 du substrat 5 et ce, de part et d'autre d'un axe de symétrie B passant par le centre O de la lunette 2 et qui est sensiblement perpendiculaire ou perpendiculaire à l'axe de révolution R de cette lunette 2. Cet axe référencé B sépare la lunette 2 en deux parties/portions et forme un angle α avec l'axe A qui est compris entre 30 et 40 degrés et qui est de préférence de 36 degrés. Ainsi le circuit d'antenne 10 et le circuit de commande tactile 13 sont en tout ou partie localisés dans les parties/portions distinctes de la lunette 2 en étant situés dans des zones distinctes de l'enceinte formée par la lunette 2 et la surface supérieure 17 du substrat 5.

Ces deux zones distinctes ou deux parties/portions de la lunette 2 sont séparées par l'axe de symétrie B. Plus précisément, la surface externe 17 de la lunette 2 comprend donc deux portions. La première portion comporte les premier et deuxième brins 19a, 19b de ce circuit d'antenne 10 et la deuxième portion les électrodes 22.

## Revendications

1. Montre électronique (1) comprenant un boitier (3) pourvu d'une carrure et d'une lunette formant en tout ou partie une interface tactile, ledit boitier (3) comprenant un dispositif électronique (4) comportant un circuit électronique (14) pourvu d'un substrat (5) dont une zone périphérique (9) de sa surface supérieure (16) forme avec ladite lunette (2) montée sur la carrure une enceinte dans laquelle sont compris un circuit d'antenne (10) d'un module de communication (6) et un circuit de commande tactile (13) d'un organe de commande tactile (8) du dispositif électronique (14), ledit circuit de commande tactile comprenant au moins un élément incurvé (25) en matériau conducteur formant une électrode (22) dont une extrémité (26a) est connectée à une borne de connexion (23a) dudit organe de commande tactile (8) qui est comprise sur la zone périphérique (9) de la surface supérieure (16) du substrat (5), ledit élément incurvé (25) comprenant une deuxième partie (27b) pourvue d'une extrémité libre (26b) qui est agencée en tout ou partie à proximité voire en contact avec une portion d'une face interne d'un corps de la lunette (2) agencée en dessous d'au moins une zone tactile (18a, 18b) de la lunette (2) définie sur une face externe (17) de ce corps, ledit circuit d'antenne (10) comprenant des premier et deuxième brins (19a, 19b) présentant chacun une extrémité proximale et une extrémité distale, et s'étendant en parallèle entre leurs extrémités proximales et distales, les premier et deuxième brins (19a, 19b) étant connectés entre eux en leurs extrémités distales ainsi qu'au niveau de leurs extrémités proximales, ce circuit d'antenne (10) étant compris en tout ou partie sur la face supérieure (16) de la zone périphérique (9) du substrat (5) ou sur une face interne d'un corps de la lunette (2), un tel circuit d'antenne (10) et le circuit de commande tactile (13) étant localisés dans la lunette (2) de part et d'autre d'un axe de symétrie (B) passant par le centre (O) de la lunette (2).

2. Montre électronique (1) selon la revendication précédente, **caractérisée en ce que** ledit élément incurvé (25) comprend une autre extrémité (26b) qui est libre.

3. Montre électronique (1) selon l'une quelconque des revendications précédentes, **caractérisée en ce que** ledit élément incurvé (25) comprend des première et deuxième parties (27a, 27b) rectilignes ou sensiblement rectilignes qui sont reliées entre elles par une troisième partie (27c) courbée de cet élément (25).

4. Montre électronique (1) selon l'une quelconque des revendications précédentes, **caractérisée en ce que** le module de communication (6) comprend un microcircuit (11) connecté à une portion de connexion (15) du circuit d'antenne (10) par l'intermédiaire d'une une borne de connexion (23b) comprise sur la face supérieure (16) du substrat (5).

5. Montre électronique (1) selon l'une quelconque des revendications précédentes, **caractérisée en ce que** le circuit de commande (13) comprend un microcontrôleur (12) connecté à ladite au moins une électrode (22) par l'intermédiaire de la borne de connexion (23a) comprise sur la face supérieure (16) du substrat (5).

6. Montre électronique (1) selon l'une quelconque des revendications précédentes, **caractérisée en ce que** la lunette (2) est fabriquée en au moins un matériau diélectrique et/ou électriquement non conducteur.

7. Montre électronique (1) selon l'une quelconque des revendications précédentes, **caractérisée en ce qu'**elle est une montre notamment une montre connectée comprenant la lunette (2) qui est une lunette (2) formant en tout ou partie une interface tactile.

8. Montre électronique (1) selon l'une quelconque des revendications précédentes, **caractérisée en ce que** l'élément incurvé (25) est compris en partie sur la surface supérieure (16) du substrat (5) notamment l'extrémité (26a) de cet élément incurvé (25) qui est la seule partie dudit élément (25) qui est comprise sur cette surface supérieure (16) en étant connectée à une borne de connexion (23a).

## Patentansprüche

1. Elektronische Uhr (1) umfassend ein Gehäuse (3), das mit einem Mittelteil und einer Lünette versehen ist, die ganz oder teilweise eine taktile Schnittstelle bildet, wobei das Gehäuse (3) eine elektronische Vorrichtung (4) umfasst, umfassend eine elektronische Schaltung (14), die mit einem Substrat (5) versehen ist, das eine periphere Zone (9) seiner oberen Fläche (16) aufweist, die mit der auf dem Mittelteil montierten Lünette (2) eine Luke bildet, in der eine Antennenschaltung (10) eines Kommunikationsmoduls (6) und eine taktile Steuerschaltung (13) eines taktilen Steuerorgans (8) der elektronischen Vorrichtung (14) vorgesehen sind, wobei die taktile Steuerschaltung mindestens ein gewölbtes Element (25) umfasst, das aus einem Leitermaterial hergestellt ist, das eine Elektrode (22) bildet, deren eines Ende (26a) mit einem Verbindungsanschluss (23a) des taktilen Steuerorgans (8) verbunden ist, das auf der peripheren Zone (9) der oberen Fläche (16) des Substrats (5) vorgesehen ist, wobei das gewölbte Element (25) einen zweiten Teil (27b) umfasst, der mit einem freien Ende (26b) versehen ist, das ganz oder teilweise in der Nähe oder in Kontakt mit einem Abschnitt einer Innenfläche eines Körpers der Lünette (2) angeordnet ist, der unter mindestens einer taktilen Zone (18a, 18b) der Lünette (2) angeordnet ist, die auf einer Außenseite (17) des Körpers definiert ist, wobei die Antennenschaltung (10) einen ersten und zweiten Strang (19a, 19b) umfasst, die jeweils ein proximales Ende und ein distales Ende aufweisen, und sich parallel zwischen ihren proximalen und distalen Enden erstrecken, wobei der erste und zweite Strang (19a, 19b) an ihren distalen Enden sowie an ihren proximalen Enden miteinander verbunden sind, wobei die Antennenschaltung (10) ganz oder teilweise auf der oberen Fläche (16) der peripheren Zone (9) des Substrats (5) oder auf einer Innenfläche eines Körpers der Lünette (2) vorgesehen ist, wobei eine Antennenschaltung (10) und die taktile Steuerschaltung (13) in der Lünette (2) auf beiden Seiten einer durch die Mitte (O) der Lünette (2) verlaufenden Symmetrieachse (B) angeordnet sind.

2. Elektronische Uhr (1) nach dem vorhergehenden Anspruch, **dadurch gekennzeichnet, dass** das gewölbte Element (25) ein weiteres Ende (26b) aufweist, das frei ist.

3. Elektronische Uhr (1) nach einem der vorhergehenden Ansprüche, **dadurch gekennzeichnet, dass** das gewölbte Element (25) einen ersten und zweiten geradlinigen oder im Wesentlichen geradlinigen Teil (27a, 27b) umfasst, die durch einen dritten gekrümmten Teil (27c) des Elements (25) miteinander verbunden sind.

4. Elektronische Uhr (1) nach einem der vorhergehenden Ansprüche, **dadurch gekennzeichnet, dass** das Kommunikationsmodul (6) eine Mikroschaltung (11) umfasst, die mit einem Verbindungsabschnitt (15) der Antennenschaltung (10) über einen Verbindungsanschluss (23b) verbunden ist, der auf der oberen Fläche (16) des Substrats (5) vorgesehen ist.

5. Elektronische Uhr (1) nach einem der vorhergehenden Ansprüche, **dadurch gekennzeichnet, dass** die Steuerschaltung (13) einen Mikrocontroller (12) umfasst, der mit der mindestens einen Elektrode (22) über den Verbindungsanschluss (23a) verbunden ist, der auf der oberen Fläche (16) des Substrats (5) vorgesehen ist.

6. Elektronische Uhr (1) nach einem der vorhergehenden Ansprüche, **dadurch gekennzeichnet, dass** die Lünette (2) aus mindestens einem dielektrischen und/oder elektrisch nicht leitenden Material hergestellt ist.

7. Elektronische Uhr (1) nach einem der vorhergehenden Ansprüche, **dadurch gekennzeichnet, dass** es sich um eine Uhr, insbesondere eine intelligente Uhr, handelt, welche die Lünette (2) umfasst, die eine Lünette (2) ist, die ganz oder teilweise eine taktile Schnittstelle bildet.

8. Elektronische Uhr (1) nach einem der vorhergehenden Ansprüche, **dadurch gekennzeichnet, dass** das gewölbte Element (25) teilweise auf der oberen Fläche (16) des Substrats (5) vorgesehen ist, insbesondere das Ende (26a) des gewölbten Elements (25), das der einzige Teil des Elements (25) ist, das auf dieser oberen Fläche (16) enthalten ist, während es mit einem Verbindungsanschluss (23a) verbunden ist.

## Claims

1. An electronic watch (1) comprising a case (3) provided with a middle and with a bezel entirely or partially forming a tactile interface, said case (3) comprising an electronic device (4) comprising an electronic circuit (14) provided with a substrate (5) having a peripheral zone (9) of its upper surface (16) that forms with said bezel (2) mounted on the middle a hatch within which are comprised an antenna circuit (10) of a communication module (6) and a tactile control circuit (13) of a tactile control organ (8) of the electronic device (14), said tactile control circuit comprising at least one cambered element (25) made of a conductor material forming an electrode (22) of which one end (26a) is connected to a connection terminal (23a) of said tactile control organ (8) which is comprised on the peripheral zone (9) of the upper surface (16) of the substrate (5), said cambered element (25) comprising a second part (27b) provided with a free end (26b) which is entirely or partially arranged near or in contact with a portion of an inner face of a body of the bezel (2) arranged beneath at least one tactile zone (18a, 18b) of the bezel (2) defined on an outer face (17) of this body, in that said antenna circuit (10) comprising first and second strands (19a, 19b) each having a proximal end and a distal end, and extending in parallel between their proximal and distal ends, the first and second strands (19a, 19b) being connected together at their distal ends as well as at their proximal ends, this antenna circuit (10) being entirely or partially comprised on the upper face (16) of the peripheral zone (9) of the substrate (5) or on an inner face of a body of the bezel (2) such an antenna circuit (10) and the tactile control circuit (13) being located in the bezel (2) on either side of an axis of symmetry (B) running through the centre (O) of the bezel (2).

2. The electronic watch (1) according to the preceding claim, **characterised in that** said cambered element (25) comprises another end (26b) which is free.

3. The electronic watch (1) according to any of the preceding claims, **characterised in that** said cambered element (25) comprises first and second rectilinear or substantially rectilinear parts (27a, 27b) which are linked together by a third curved part (27c) of this element (25).

4. The electronic watch (1) according to any of the preceding claims, **characterised in that** the communication module (6) comprises a microcircuit (11) connected to a connecting portion (15) of the antenna circuit (10) via a connection terminal (23b) comprised on the upper face (16) of the substrate (5).

5. The electronic watch (1) according to any of the preceding claims, **characterised in that** the control circuit (13) comprises a microcontroller (12) connected to said at least one electrode (22) via the connection terminal (23a) comprised on the upper face (16) of the substrate (5).

6. The electronic watch (1) according to any of the preceding claims, **characterised in that** the bezel (2) is manufactured in at least one dielectric and/or electrically non-conductor material.

7. The electronic watch (1) according to any of the preceding claims, **characterised in that** it is a watch, in particular a smartwatch, comprising the bezel (2) which is a bezel (2) entirely or partially forming a tactile interface.

8. The electronic watch (1) according to any of the preceding claims, **characterised in that** the cambered element (25) is partially comprised on the upper surface (16) of the substrate (5), in particular the end (26a) of this cambered element (25) which is the only part of said element (25) that is comprised on this upper surface (16) while being connected to a connection terminal (23a).
